# EUROPÄISCHE PATENTSCHRIFT

(11) **EP 1 729 993 B1**
(45) Veröffentlichungstag und Bekanntmachung des Hinweises auf die Patenterteilung: **03.12.2014**
(21) Anmeldenummer: 05728300.4
(22) Anmeldetag: 22.03.2005
(51) Int. Cl.: B60L 13/06

(54) **VORRICHTUNG ZUR ERZEUGUNG SICHERER ZUSTANDSSIGNALE VON EINEM LÄNGS EINES VORGEGEBENEN FAHRWEGS BEWEGBAREN FAHRZEUG**
DEVICE FOR THE GENERATION OF RELIABLE STATUS SIGNALS OF A VEHICLE THAT IS MOVABLE ALONG A GIVEN PATH OF TRAVEL
DISPOSITIF DE PRODUCTION DE SIGNAUX D'ETAT FIABLES PROVENANT D'UN VEHICULE SE DEPLAÇANT LE LONG D'UN PARCOURS PREDETERMINE

(30) Priorität: 26.03.2004 DE 102004015496
(43) Veröffentlichungstag der Anmeldung: 13.12.2006
(73) Patentinhaber: ThyssenKrupp Transrapid GmbH, 34127 Kassel (DE)
(72) Erfinder: ELLMANN, Siegfried, 85609 Aschheim (DE); LÖSER, Friedrich, 85521 Riemerling (DE)
(74) Vertreter: Lorenz, Bernd Ingo Thaddeus
(86) Internationale Anmeldenummer: PCT/DE2005/000523
(87) Internationale Veröffentlichungsnummer: WO 2005/095145

(56) Entgegenhaltungen:
- DE-A- 10 232 720
- JP-A- 08 011 721
- US-A- 4 603 640
- US-A- 6 029 104

## Beschreibung

Die Erfindung betrifft eine Vorrichtung der im Oberbegriff des Anspruchs 1 angegebenen Gattung.

Bei bekannten Vorrichtungen dieser Art (z. B. DE 33 03 961 C2) ist an einer Seite eines für Magnetschwebefahrzeuge bestimmten Fahrwegs ein Positionsgeber in Form einer Meßleiste angebracht, die z. B. mit als Schlitze ausgebildeten Markierungen versehen ist, die in codierter Form absolute Informationen über den Ort enthalten, an dem sie angebracht sind. Am Fahrzeug ist eine Erfassungseinheit vorgesehen, mittels derer die absoluten Ortsinformationen ausgelesen werden. Die ausgelesenen Ortsinformationen werden z. B. über Funk an eine zentrale, in einem Leitstand untergebrachte Fahrzeug- und Fahrwegsteuerung übermittelt.

Weiterhin ist es bei Magnetschwebefahrzeugen, die mit Langstator-Linearmotoren angetrieben werden, bekannt (DE 31 48 007 C2), die Fahrzeuge mit einer an einen Zähler angeschlossenen Erfassungseinheit in Form einer Nutenmeßeinrichtung zu versehen, mittels derer die Nuten des Langstators abgetastet und mit der Nutteilung schwankende, periodische Signale erzeugt werden. Diese Signale werden zwar insbesondere zur Herstellung einer optimalen Phasenbeziehung zwischen dem Langstator und dem Fahrzeug verwendet, können aber durch Auswertung des Zählerstandes des Zählers auch der Ermittlung einer relativen Ortsinformation dienen. Bei bekannten Magnetschwebebahnen erfolgt dies dadurch, daß der Nutenzähler von jeder ausgelesenen absoluten Ortsinformation auf Null zurück gesetzt wird, so daß der aktuelle Zählerstand immer den Abstand des Fahrzeugs vom letzten absoluten Ort angibt.

Ein Nachteil der beschriebenen Ortserkennung besteht darin, daß sie nicht ausreichend sicher ist, da die beschriebenen Erfassungseinheiten, Meßeinrichtungen, Meßleisten usw. und andere Komponenten der eingangs bezeichneten Vorrichtung jederzeit aufgrund eines Defektes ausfallen können. Bei der Steuerung insbesondere eines fahrerlosen Fahrzeugs wie einer Magnetschwebebahn sind aber gesicherte Informationen über den aktuellen Ort des Fahrzeugs von ausschlaggebender Bedeutung. Auf der Basis der Ortsinformation erfolgt die Anpassung der Fahrtgeschwindigkeit und das Anhalten der Fahrzeuge an Bahnhöfen oder bei Gefahr an anderen vorgegebenen Haltepunkten. Die Richtigkeit und Verfügbarkeit der aktuellen Ortsinformation bildet daher die Grundlage für eine sichere Betriebssteuerung.

Entsprechendes ergibt sich für im Fahrzeug erzeugte Geschwindigkeits- und Richtungssignale. Diese können z. B. aus den Ortsinformationen dadurch abgeleitet werden, daß ständig die Zahl der pro Zeiteinheit vom Fahrzeug passierten, eine konstante Länge aufweisenden Nuten eines Langstators ermittelt oder mit Hilfe von zwei in Fahrtrichtung versetzten Erfassungseinheiten festgestellt wird, in welcher Richtung am Fahrweg angebrachte absolute Ortsinformationen am Fahrzeug vorbei bewegt werden. Sind die Ortsinformationen unsicher, sind auch die Geschwindigkeits- und Richtungsinformationen unsicher. Eine kombinierte Erfassung von relativen und absoluten Ortsinformationen ist aus der US 4 603 640 A bekannt. Neben einer Erfassung der aufeinander folgenden Nuten des Langstators einer Magnetschiebebahn werden auch absolute Ortsinformationen ausgelesen. Die Störanfälligkeit des beschriebenen Systems ist jedoch verbesserungsbedürftig.

Eine Vorrichtung mit den Merkmalen des Oberbegriffes des Anspruches 1 ist des weiteren aus der US 6 029 104 A bekannt. Es wird ein schienengebundenes Fahrzeug beschrieben, welches mit zwei Barcodescannern ausgerüstet ist, mit denen an beiden Seiten des Fahrwegs Barcodes ausgelesen werden können. Durch den Einsatz von zwei Scannern wird dabei eine Redundanz erreicht. Wenn die Erfassung der Barcodes mit einem der Scanner fehlschlägt, wird ein Fehlersignal abgegeben und das Fahrzeug zurück in ein Depot gebracht. Bei der Bewertung der Zuverlässigkeit eines solchen Systems wird von der zu erwartenden Lebensdauer der Scanner als elektronische Bauteile ausgegangen. In der Praxis kommen hierzu aber auch noch andere Störeinflüsse, welche unter Umständen eine häufige Wartung erforderlich machen.

Zur Vereinheitlichung der Begriffe werden die Orts-, Geschwindigkeits- und Richtungssignale nachfolgend unter dem Sammelbegriff "Zustandssignale" zusammengefaßt.

Ausgehend vom oben erläuterten Stand der Technik liegt der Erfindung das technische Problem zugrunde, die Vorrichtung der eingangs bezeichneten Gattung so auszubilden, daß sie die Erzeugung sicherer Zustandssignale auch beim Auftreten zahlreicher möglicher Störungen und Ausfälle von beteiligten Komponenten garantiert.

Zur Lösung dieses Problems dienen die kennzeichnenden Merkmale des Anspruchs 1.

Die Erfindung bringt den Vorteil mit sich, daß mehrere Erfassungseinheiten redundant verknüpft und von der Auswerteeinheit nur dann Zustandssignale abgegeben werden, wenn die Erfassungseinheiten übereinstimmende Informationen liefern. Die Zustandssignale können dann als sicher bezeichnet werden. Das gilt unabhängig davon, ob es sich im Einzelfall um Lagesignale oder um aus Ortsinformationen abgeleitete oder anderswie erhaltene Geschwindigkeits- oder Richtungssignale handelt.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 einen schematischen Vertikalschnitt durch ein Magnetschwebefahrzeug und einen Fahrweg;
Fig. 2 ein Beispiel für am Fahrweg angebrachte Positionsgeber für relative und absolute Ortsinformationen;
Fig. 3 eine schematische Draufsicht auf das Fahrzeug nach Fig. 1 und eine in ihm untergebrachte, erfindungsgemäße Vorrichtung; und
Fig. 4 in Form einer Tabelle mögliche Ausfallkombinationen bei der Ortsermittlung.

Die erfindungsgemäße Vorrichtung wird zunächst allgemein am Beispiel der Erzeugung sicherer Lagesignale für ein spurgebundenes Fahrzeug und speziell am Beispiel einer Magnetschwebebahn mit einem synchronen Langstator-Linearmotor beschrieben. Für den Fachmann ist jedoch klar, daß die erfindungsgemäße Vorrichtung in entsprechender Abwandlung auch bei anderen spurgebundenen Fahrzeugsystemen angewendet werden kann.

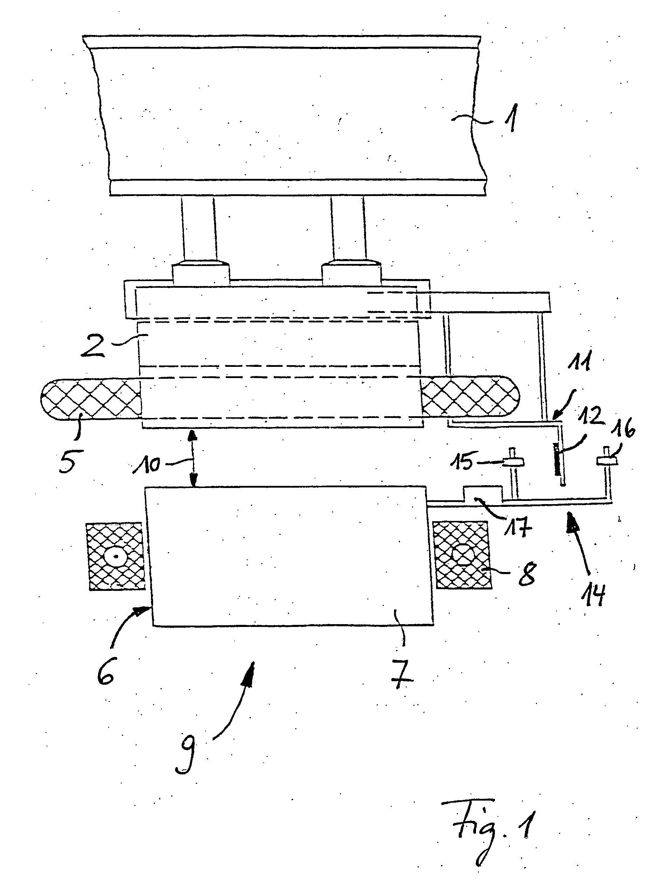

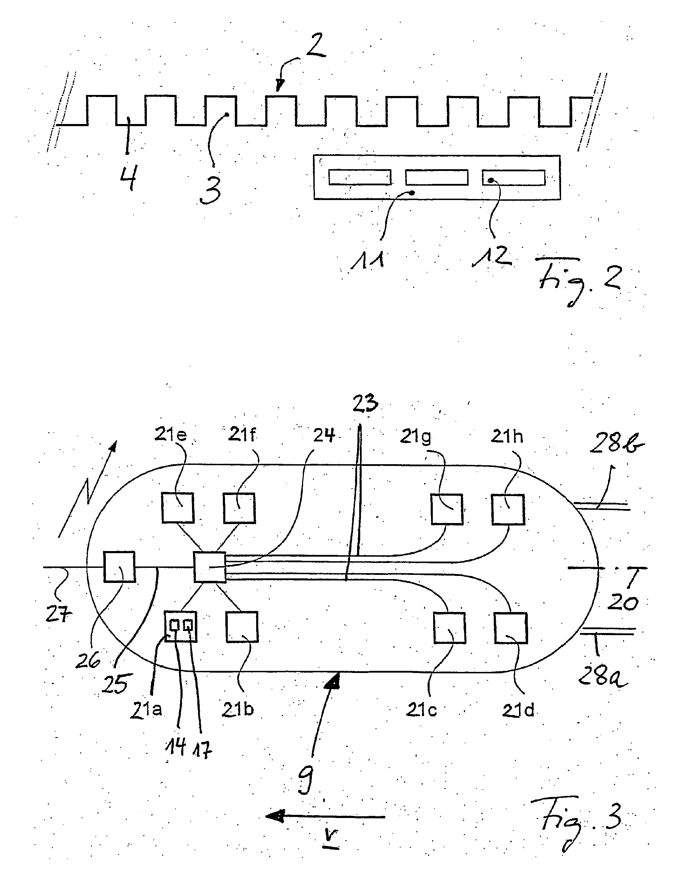

Nach Fig. 1 enthält die Magnetschwebebahn einen Fahrweg 1, an dem ein aus einzelnen Statorpaketen gebildeter und in Fahrtrichtung erstreckter Langstator 2 eines Langstator-Linearmotors befestigt ist. Der Langstator 2 weist an seiner Unterseite abwechselnd Nuten 3 (Fig. 2) und Zähne 4 auf. In die Nuten 3 ist eine Dreiphasen-Wechselstrom-Wicklung 5 (Fig. 1) eingelegt, die mit Drehstrom variabler Amplitude und Frequenz gespeist wird. Das Erregerfeld des Langstator-Linearmotors wird von Tragmagneten 6 erzeugt, die aus Kernen 7 und diese umgebenden Wicklungen 8 bestehen, an einem Fahrzeug 9 montiert sind und gleichzeitig der Funktion "Tragen" dienen, um zwischen dem Fahrweg 1 (bzw. dem Langstator 2) und dem Fahrzeug 9 (bzw. den Tragmagneten 6) beim Betrieb einen für die Schwebezustand charakteristischen Tragspalt 10 herzustellen.

Zur Ermittlung der jeweiligen Fahrzeuglage ist längs des Fahrwegs 1 z. B. ein Informationsgeber 11 in Form einer länglichen Leiste angebracht. Der Informationsgeber 11 nimmt vorzugsweise eine definierte Lage zum Langstator 2 bzw. zu dessen Nuten 3 und Zähnen 4 ein, um in an sich bekannter Weise eine für die Bestimmung der Pollage eindeutige Zuordnung zu erhalten. In dem Informationsgeber 11 sind, vorzugsweise in binär codierter Form, Ortsinformationen gespeichert, die z. B. aus Schlitzkombinationen bestehen können. Alternativ können die Ortsinformationen auch als elektrisch leitende Schichten 12 auf einer Leiste bestehen, die durchgehend aus einem elektrisch isolierenden Material hergestellt ist, wie Fig. 1 und 2 andeuten. Die Ortsinformationen sind z. B. alle 200 m vorgesehen und so codiert, daß jede einzelne Ortsinformation eindeutig einer absoluten Position des Fahrzeugs 9 längs des Fahrwegs 1 zugeordnet ist.

Fig. 1 zeigt außerdem schematisch einen z. B. induktiven Sensor 14, der einen hochfrequenten, auf einer Seite des Informationsgebers 11 angeordneten Sender 15 und einen auf der anderen Seite des Positionsgebers 11 angeordneten Empfänger 16 enthält, um die abwechselnd aufeinander folgenden Schichten 12 und die Zwischenräume zwischen ihnen zu erkennen.

Vorrichtungen der beschriebenen Art sind z. B. aus der Druckschrift DE 33 03 961 C2 bekannt, die hiermit der Einfachheit halber durch Referenz zum Gegenstand der vorliegenden Offenbarung gemacht wird.

Zur Ermittlung einer relativen Ortsinformation dienen z. B. die ohnehin vorhandenen Nuten 3 (Fig. 2). Zu diesem Zweck weist das Fahrzeug 9 einen weiteren Sensor 17 (Fig. 1) auf, der zur Vereinfachung der Darstellung neben dem Langstator 2 dargestellt ist, tatsächlich aber in Fig. 1 direkt unter diesem liegt und z. B. vor oder hinter einem Tragmagneten 6 angeordnet wird. Das für die relative Ortsinformation charakteristische Signal wird z. B. von einem mit dem Sensor 17 verbundenen, elektronischen Zähler geliefert, wie z. B. aus der Druckschrift DE 31 48 007 C2 bekannt ist, die hiermit ebenfalls durch Referenz zum Gegenstand der vorliegenden Offenbarung gemacht wird.

In Fig. 3 ist schematisch eine Draufsicht auf das Magnetschwebefahrzeug 9 dargestellt, das parallel zu einer Längsachse 20 auf dem Fahrweg 1 fahren kann. Im bzw. am Fahrzeug 9 sind acht Ort-Erfassungseinheiten 21a bis 21h angeordnet, wobei jede Erfassungseinheit 21a bis 21h je einen Sensor 14 für die absolute Ortsinformation und einen Sensor 17 für die relative Ortsinformation enthält, wie in Fig. 3 schematisch für die Ort-Erfassungseinheit 21 a angedeutet ist. Alle acht Erfassungseinheiten 21 sind über elektrische Leitungen 23 mit einer Auswerteeinrichtung 24 verbunden, die einen Ausgang 25 aufweist, an dem sichere, dem momentanen Ort des Fahrzeugs 19 genau entsprechende Lagesignale abgegeben werden, wie weiter unter erläutert ist. Mit dem Ausgang 25 ist vorzugsweise eine an sich bekannte Funkeinrichtung 26 verbunden (z. B. ZEVrail Glasers Annalen, Sonderheft Transrapid, Oktober 2003, Seiten 88 bis 94), die eine Antenne 27 aufweist, über die die sicheren Lagesignale an einen zentralen Leitstand od. dgl. weitergeleitet werden, von dem aus der Betrieb des Fahrzeugs 9 gesteuert wird.

In der Auswerteeinrichtung 24 werden die von den Ort-Erfassungseinheiten 21 gelieferten Informationen logisch verknüpft. Dabei wird zugelassen, daß innerhalb jeder Erfassungseinheit 21 einer der beiden Sensoren 14, 17 defekt sein kann. Das bedeutet, daß die von den Erfassungseinheiten 21 gelieferten Informationen als richtig angesehen werden, wenn nur einer der beiden Sensoren 14, 17 ein Ortsignal abgibt. Gibt keiner der Sensoren 14, 17 ein Signal ab oder weichen die Signale zusammengehöriger Sensoren 14, 17 voneinander ab, was durch einen einfachen Vergleich festgestellt werden kann, wird die betreffende Erfassungseinheit 21 als defekt angenommen.

Außerdem wird davon ausgegangen, daß rechts und links am Fahrweg 1 durchgehend relative und absolute Ortsinformationen vorhanden sind, wie in Fig. 3 allgemein durch die Bezugszeichen 28a und 28b angedeutet ist.

Damit eine sichere Ortserkennung auch in Anbetracht möglicher Störfälle garantiert ist, sind erfindungsgemäß auf jeder Fahrzeugseite, d. h. beidseits der Längsachse 20, sowohl im Bug- als auch im Heckbereich vorzugsweise je zwei Ort-Erfassungseinheiten 21 vorgesehen. Bei Fahrt in Richtung eines Pfeils v sind z. B. die Ort-Erfassungseinheiten 21a, 21b links am Bug, die Ort-Erfassungseinheiten 21c, 21 d links am Heck und die Ort-Erfassungseinheiten 21 e, 21f bzw. 21g, 21h entsprechend auf der rechten Seite angeordnet. Eine Anordnung im Bug- bzw. Heckbereich wird deshalb als zweckmäßig angesehen, weil im mittleren Teil des Fahrzeugs 9 wegen der dort befindlichen Trag-, Führ- und Bremsmagnete zu wenig Platz ist. Die von den Erfassungseinheiten 21 gelieferten Signale werden daher jeweils auf einen mittleren Teil des Fahrzeugs 9 umgerechnet.

Als Störfälle sind z. B. folgende Situationen in Betracht zu ziehen:
a) Ein außergewöhnlicher Störfall kann z. B. aufgrund von Steinschlag, Sabotage od. dgl. vorliegen. In diesem Fall sind insbesondere die im Bugbereich befindlichen Erfassungseinheiten 21a, 21b und 21e, 21f gefährdet, während die hinteren Erfassungseinheiten aufgrund des davor liegenden Fahrzeugkörpers weitgehend gegen auf der Fahrbahn liegende Gegenstände od. dgl. geschützt sind. Bei Fahrt in umgekehrter Richtung gilt dasselbe für die vorn bzw. hinten liegenden Paare von Ort-Erfassungseinheiten.
b) Jede Erfassungseinheit 21 kann für sich aufgrund eines technischen Defekts ausfallen. Das gilt sowohl für die Sensoren 14 als auch für die Sensoren 17.
c) Eine Ausfallsituation kann sich dadurch ergeben, daß eine oder mehrere absolute Ortsinformationen nicht mehr vorhanden sind. Eine Ursache dafür kann eine mutwillige Zerstörung zumindest von Teilen der Informationsgeber 11 sein. Werden statt einer durchgehenden Leiste einzelne, am Fahrweg angebrachte Ortsmarken od. dgl. als Informationsgeber 11 vorgesehen, können diese auch z. B. aufgrund mangelhafter Befestigung nicht mehr vorhanden sein.

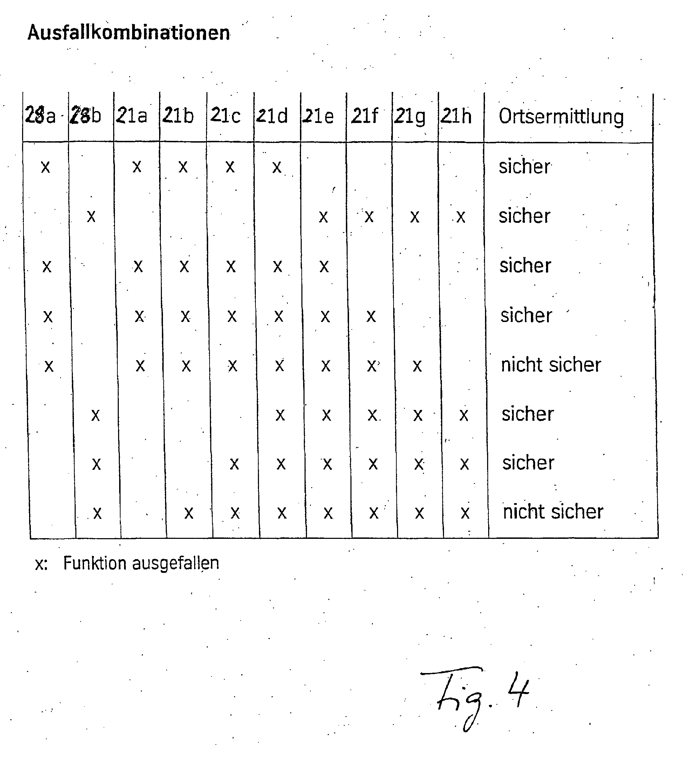

Um trotz der genannten möglichen Störfälle eine sichere Ortsermittlung zu ermöglichen, wird die Auswerteeinrichtung 24 erfindungsgemäß wie folgt eingerichtet:
1.) Solange nur eine oder zwei Erfassungseinheiten 21 ausfallen, wird die sichere Ortserkennung nicht beeinträchtigt, da genügend andere Ort-Erfassungseinheiten zur Verfügung stehen. Durch Vergleich von deren Ausgangssignalen kann außerdem überprüft werden, ob die verbleibenden Sensoren richtig arbeiten.
2.) Fallen z. B. auf der linken Fahrzeugseite sowohl die relativen als auch die absoluten Ortsinformationen 28a aus, dann geben auf dieser Seite die Erfassungseinheiten 21a bis 21 d keine den Ort kennzeichnenden Signale ab. Dennoch ist eine sichere Ortsermittlung möglich, solange die vier anderen Erfassungseinheiten 21 e bis 21h ordnungsgemäß arbeiten. Dieser Fall ist in der ersten Zeile der Tabelle in Fig. 4 schematisch dargestellt.
3.) Dieselbe Situation wie in 2.) kann sich für die rechte Fahrzeugseite ergeben, wie die zweite Zeile in Fig. 4 für den Ausfall der Ortsinformationen 28b zeigt.
4.) In den Fällen 2.) und 3.) kann zusätzlich eine Erfassungseinheit der rechten bzw. linken Seite ausfallen, z. B. die Erfassungseinheit 21 e oder die Ort-Erfassungseinheit 21 d. Da noch drei Ort-Erfassungseinheiten ihre Signale an die Auswerteeinrichtung 24 liefern, ist eine sichere Ortserkennung möglich, wie die dritte und sechste Zeile in Fig. 4 zeigen.
5.) Eine sichere Ortsermittlung ist selbst dann noch möglich, wenn die Ortsinformationen 28a, 28b auf der rechten oder linken Seite ausfallen und zusätzlich zwei Ort-Erfassungseinheiten auf der rechten oder linken Seite defekt sind (z.B. 21 e, 21f bzw. 21 c, 21 d). Das ergibt sich aus der vierten und siebenten Zeile in Fig. 4.
   Beim zuletzt beschriebenen Störfall sind nur noch zwei Ort-Erfassungseinheiten vorhanden. Für diesen Fall werden erfindungsgemäß wiederum die Ausgangssignale der beiden verbleibenden Ort-Erfassungseinheiten (z. B. 21g, 21 h in der vierten Zeile der Fig. 4) einem Vergleich unterzogen. Liefern beide Erfassungseinheiten übereinstimmende Ortsinformationen, dann wird die Ortsermittlung als richtig angesehen und am Ausgang 25 ein sicheres Lagesignal abgegeben. Ergibt der Vergleich dagegen unterschiedliche Signale, dann wird am Ausgang 25 ein Fehlersignal abgegeben, um ein Anhalten des Fahrzeugs 9 einzuleiten, da für diesen Fall nicht sicher entschieden werden kann, ob die verbliebenen, eine Ortsinformation liefernden Erfassungseinheiten richtig arbeiten oder z. B. nur zufällig ein Ortsignal abgeben.
6.) Eine dem Störfall nach 5.) entsprechende Situation kann sich ergeben, wenn z. B. alle Ort-Erfassungseinheiten 21 a, 21 b, 21 e, 21 f, im Bugbereich und zusätzlich zwei Ort-Erfassungseinheiten (z. B. 21c, 21g oder 21c, 21d) im Heckbereich ausfallen. Dennoch ist auch hier eine sichere Ortserkennung möglich.
7.) Schließlich ist in der fünften und achten Zeile der Fig. 4 ein Fall dargestellt, der keine sichere Ortsermittlung ermöglicht, da nur noch eine einzige Erfassungseinheit 21 a bzw. 21h eine Ortsinformation liefert. Für diesen Fall steht keine zweite Erfassungseinheit zur Verfügung, mittels derer durch Vergleich überprüft werden könnte, ob diese Ortsinformation sicher oder unsicher ist. Für diesen Fall wird am Ausgang 25 vorsorglich ein das Anhalten des Fahrzeugs 18 bewirkendes Fehlersignal abgegeben.

Die beschriebene Vorrichtung enthält insgesamt acht Erfassungseinheiten 21 mit je zwei unterschiedlichen Sensoren 14, 17 und bietet daher eine hohe Redundanz. Je nach Einzelfall könnten aber auch mehr oder weniger Erfassungseinheiten und/oder Informationsgeber vorgesehen sein. Vom Prinzip her werden sehr sichere Zustandssignale am Ausgang 25 (Fig. 3) durch Verknüpfung redundanter Informationen bereits dann erhalten, wenn mehr als zwei Erfassungseinheiten vorhanden sind, die mit zwei Informationsgebern zusammenwirken und nur je einen Sensor 14 bzw. 17 aufweisen, ohne daß das Fahrzeug beim Auftreten einer Störung in einer Erfassungseinheit oder einem Informationsgeber angehalten werden muß.

Was nach der obigen Beschreibung für die sicheren Lagesignale zutrifft, gilt entsprechend auch für andere Zustandssignale wie z. B. Geschwindigkeits- oder Richtungssignale. Dabei ist unbedeutend, ob diese anderen Zustandssignale aus den beschriebenen Ortsinformationen abgeleitet oder mit anderen Mitteln erzeugt werden, indem ihnen beispielsweise längs des Fahrwegs separate Informationsgeber zugeordnet sind.

Obwohl die Auswerteeinrichtung 24 im Inneren des Fahrzeugs 9 und damit an einem sicheren Ort angeordnet werden kann, empfiehlt es sich, auch für sie Redundanz vorzusehen. Dies kann z. B. durch Anwendung von zwei identischen Auswerteeinrichtungen bzw. von einer aus zwei identischen Rechnersystemen aufgebauten Auswerteeinrichtung und deren Verbindung mit denselben Erfassungseinheiten 21 a bis 21h erreicht werden. Dabei wird ein sicheres Zustandssignal nur dann über die Antenne 27 abgegeben, wenn die Ausgangssignale beider Auswerteeinrichtungen oder Rechnersysteme identisch sind. Dabei wäre es auch möglich, die Rechnersysteme bzw. Auswerteeinheiten in Bezug auf Hard- und/oder Software unterschiedlich auszubilden.

Die Erfindung ist nicht auf das beschriebene Ausführungsbeispiel beschränkt, das auf vielfache Weise abgewandelt werden kann. Das gilt z. B. für die Ausbildung der nur beispielhaft angegebenen Informationsgeber 11 und 2, für die auch andere Bauteile mit anderen Codierungen verwendet werden können. Auch die Anordnung der Erfassungseinheiten im oder am Fahrzeug 9 ist weitgehend frei wählbar. Weiterhin ist klar, daß die beschriebene Vorrichtung auch bei anderen Verkehrssystemen wie z. B. Eisenbahnen eingesetzt werden kann, indem bei diesen u. a. die Gleisstruktur zur Informationsgabe verwendet oder zumindest herangezogen wird. Schließlich versteht sich, daß die verschiedenen Merkmale auch in anderen als den beschriebenen und dargestellten Kombinationen angewendet werden können.

## Patentansprüche

1. Vorrichtung zur Erzeugung sicherer Zustandssignale von einem längs eines vorgegebenen Fahrwegs (1) bewegbaren Fahrzeug (9), enthaltend stationär längs des Fahrwegs (1) angeordnete, mit Informationen versehene Informationsgeber (2, 11), am Fahrzeug (9) angeordnete Erfassungseinheiten (21) zur Abtastung der Informationsgeber (2, 11) und zur Lieferung von Informationssignalen und mit einer an die Erfassungseinheiten (21) angeschlossenen Auswerteeinrichtung (24) zur Auswertung der Informationssignale, **dadurch gekennzeichnet, daß** wenigstens vier mit der Auswerteeinrichtung (24) verbundene Erfassungseinheiten (21) vorhanden sind, die wenigstens zwei stationär angeordneten Informationsgebern (2, 11) paarweise zugeordnet sind, wobei die Auswerteeinrichtung (24) einen Ausgang (25) aufweist, an dem die sicheren Zustandssignale abgegeben werden, wenn und so lange wenigstens zwei der wenigstens vier Erfassungseinheiten (21) übereinstimmende Informationen liefern.

2. Vorrichtung nach Anspruch 1, **dadurch gekennzeichnet, daß** die Informationsgeber (11) erste, mit absoluten Ortsinformationen (12) versehene Positionsgeber enthalten.

3. Vorrichtung nach Anspruch 2, **dadurch gekennzeichnet, daß** die ersten Informationsgeber (11) aus mit binär codierten Ortsangaben versehenen Positionsgebern bestehen.

4. Vorrichtung nach einem der Ansprüche 1 bis 3, **dadurch gekennzeichnet, daß** die Informationsgeber (2) zweite, mit relativen Ortsinformationen (3) versehene Positionsgeber enthalten.

5. Vorrichtung nach Anspruch 4, **dadurch gekennzeichnet, daß** die zweiten Informationsgeber (2) aus längs des Fahrwegs (1) angeordneten, Nuten (3) und Zähne (4) aufweisenden Langstatoren von zum Antrieb des Fahrzeugs (9) bestimmten Langstator-Linearmotoren bestehen.

6. Vorrichtung nach Anspruch 4 oder 5, **dadurch gekennzeichnet, daß** die Erfassungseinheit (21) wenigstens einen ersten Sensor (14) für die absoluten Ortsinformationen und einen zweiten Sensor (17) für die relativen Ortsinformationen aufweist.

7. Vorrichtung nach Anspruch 6, **dadurch gekennzeichnet, daß** die Auswerteeinrichtung (24) so ausgebildet ist, daß sie beim Ausfall eines der beiden Sensoren (14, 17) einer Erfassungseinheit (21) die vom jeweils anderen Sensor (17 bzw. 14) derselben Erfassungseinheit (21) abgegebenen Ortsinformationen als richtig bewertet.

8. Vorrichtung nach einem der Ansprüche 1 bis 7, **dadurch gekennzeichnet, daß** die Auswerteeinrichtung (24) zur Abgabe von sicheren Lage-, Geschwindigkeits- und/oder Richtungssignalen für das Fahrzeug (9) eingerichtet ist.

9. Vorrichtung nach Anspruch 8, **dadurch gekennzeichnet, daß** die Auswerteeinrichtung (24) so eingerichtet ist, daß die sicheren Geschwindigkeits- und Richtungssignale aus den relativen Ortsinformationen ableitbar sind.

10. Vorrichtung nach einem der Ansprüche 1 bis 9, **dadurch gekennzeichnet, daß** am Fahrzeug (9) wenigstens acht Erfassungseinheiten (21) vorgesehen sind, die paarweise am Bug und am Heck jeweils rechts und links angeordnet sind.

11. Vorrichtung nach einem der Ansprüche 1 bis 10, **dadurch gekennzeichnet, daß** die Auswerteeinrichtung (24) so eingerichtet ist, daß die sicheren Zustandssignale nur dann erzeugt werden, wenn eine Mehrheit der Erfassungseinheiten (21) übereinstimmende Informationssignale liefert.

12. Vorrichtung nach einem der Ansprüche 1 bis 11, **dadurch gekennzeichnet, daß** die Auswerteeinrichtung (24) wenigstens zwei, an dieselben Erfassungseinheiten (21) angeschlossene Rechnersysteme aufweist und ein Zustandssignal nur abgegeben wird, wenn beide Rechnersysteme übereinstimmende Ortsinformationen liefern.

13. Vorrichtung nach Anspruch 12, **dadurch gekennzeichnet, daß** die beiden Rechnersysteme in Bezug auf Hard- und/oder Software unterschiedlich ausgebildet sind.

## Claims

1. A device for generating reliable state signals from a vehicle (9) movable along a predefined travel path (1), containing information transmitters (2, 11) stationarily arranged along the travel path (1) and provided with information, detection units (21) arranged on the vehicle (9) for scanning the information transmitters (2, 11) and for supplying information signals and with evaluation means (24) connected with the detection units (21) for evaluating the information signals, **characterised in that** there are at least four detection units (21) connected with the evaluation means (24), which are assigned in pairs to at least two stationarily arranged information transmitters (2, 11), wherein the evaluation means (24) comprise an output (25) at which the reliable state signals are output when, and as long as, at least two of the at least four detection units (21) supply matching information.

2. The device according to claim 1, **characterised in that** the information transmitters (2, 11) include first position encoders provided with absolute location information (12).

3. The device according to claim 2, **characterised in that** the first information transmitters (11) consist of position encoders provided with location details in the form of binary code.

4. The device according to one of claims 1 to 3, **characterised in that** the information transmitters (2) contain second position encoders provided with relative location information (3).

5. The device according to claim 4, **characterised in that** the second information transmitters (2) consist of grooves (3) arranged along the travel path (1) and of longstators with teeth (4) of longstator linear motors destined for driving the vehicle (9).

6. The device according to claim 4 or 5, **characterised in that** the detection unit (21) comprises at least one first sensor (14) for the absolute location information and a second sensor (17) for the relative location information.

7. The device according to claim 6, **characterised in that** the evaluation means (24) are configured, in case one of the two sensors (14, 17) of a detection unit (21) fails, to evaluate the location information output by the respectively other sensor (17 or 14) of the same detection unit (21) as being correct.

8. The device according to one of claims 1 to 7, **characterised in that** the evaluation means (24) are arranged for outputting reliable position, speed and/or direction signals for the vehicle (9).

9. The device according to claim 8, **characterised in that** the evaluation means (24) are configured such that the reliable speed and direction signals can be derived from the relative location information.

10. The device according to one of claims 1 to 9, **characterised in that** at least eight detection units (21) are provided on the vehicle (9), which are arranged in pairs at the nose and the tail on the right-hand side and the left-hand side respectively.

11. The device according to one of claims 1 to 10, **characterised in that** the evaluation means (24) are configured such that the reliable state signals are generated only when a majority of detection units (21) supplies matching information signals.

12. The device according to one of claims 1 to 11, **characterised in that** the evaluation means (24) comprise at least two computer systems connected with the same detection units (21), and a state signal is output only when both computer systems supply matching information.

13. The device according to claim 12, **characterised in that** the two computer systems are of different designed with regard to hardware and/or software.

## Revendications

1. Dispositif pour la production de signaux d'état fiables par un véhicule (9) pouvant se déplacer le long d'un parcours (1) prédéterminé, comprenant des émetteurs d'informations (2, 11) comportant des informations et disposés de manière stationnaire le long du parcours (1), des unités de détection (21) disposées sur le véhicule (9) pour l'exploration des émetteurs d'informations (2, 11) et pour la délivrance de signaux d'informations et avec un dispositif d'évaluation (24) raccordé aux unités de détection (21) pour l'évaluation des signaux d'informations, **caractérisé en ce qu'**il y a au moins quatre unités de détection (21) en liaison avec le dispositif d'évaluation (24), lesquelles sont associées par paires à au moins deux émetteurs d'informations (2, 11) disposés de manière stationnaire, le dispositif d'évaluation (24) présentant une sortie (25) à laquelle les signaux d'état fiables sont émis lorsque, et aussi longtemps que, au moins deux des au moins quatre unités de détection (21) délivrent des informations concordantes.

2. Dispositif selon la revendication 1, **caractérisé en ce que** les émetteurs d'informations (2,11) comprennent des premiers indicateurs de position munis d'informations de localisation absolues (12).

3. Dispositif selon la revendication 2, **caractérisé en ce que** les premiers émetteurs d'informations (11) se composent d'indicateurs de position munis d'indications de localisation codées de manière binaire.

4. Dispositif selon l'une des revendications 1 à 3, **caractérisé en ce que** les émetteurs d'informations (2) comprennent des deuxièmes indicateurs de position munis d'informations de localisation relatives (3).

5. Dispositif selon la revendication 4, **caractérisé en ce que** les deuxièmes émetteurs d'informations (2) se composent de stators longs présentant des rainures (3) et des dents (4) et disposés le long du parcours (1), de moteurs linéaires à stator long destinés à l'entraînement du véhicule (9).

6. Dispositif selon la revendication 4 ou 5, **caractérisé en ce que** l'unité de détection (21) présente au moins un premier capteur (14) pour les informations de localisation absolues et un deuxième capteur (17) pour les informations de localisation relatives.

7. Dispositif selon la revendication 6, **caractérisé en ce que** le dispositif d'évaluation (24) est réalisé de manière à ce que, en cas de défection de l'un des deux capteurs (14, 17) d'une unité de détection (21), il évalue comme étant justes les informations de localisation respectivement délivrées par l'autre capteur (17 ou 14) de cette même unité d'évaluation (21).

8. Dispositif selon l'une des revendications 1 à 7, **caractérisé en ce que** le dispositif d'évaluation (24) est étudié pour la délivrance de signaux fiables de position, vitesse et/ou de direction pour le véhicule (9).

9. Dispositif selon la revendication 8, **caractérisé en ce que** le dispositif d'évaluation (24) est étudié de manière à ce que les signaux fiables de vitesse et de direction puissent être déduits des informations de localisation relatives.

10. Dispositif selon l'une des revendications 1 à 9, **caractérisé en ce que** l'on prévoit au moins huit unités de détection (21) sur le véhicule (9), lesquelles sont disposées par paires respectivement à droite et à gauche à l'avant et à l'arrière.

11. Dispositif selon l'une des revendications 1 à 10, **caractérisé en ce que** le dispositif d'évaluation (24) est étudié de manière à ce que les signaux d'état fiables sont seulement générés si une majorité des unités de détection (21) délivre des signaux d'informations concordants.

12. Dispositif selon l'une des revendications 1 à 11, **caractérisé en ce que** le dispositif d'évaluation (24) présente au moins deux systèmes informatiques connectés aux mêmes unités de détection (21) et **en ce qu'**un signal d'état est seulement émis si les deux systèmes informatiques délivrent des informations de localisation concordantes.

13. Dispositif selon la revendication 12, **caractérisé en ce que** les deux systèmes informatiques sont réalisés différemment concernant le matériel et/ou logiciel.
